# EUROPEAN PATENT APPLICATION

(11) **EP 4 773 041 A1**
(43) Date of publication of application: **08.07.2026**
(21) Application number: 25225632.6
(22) Date of filing: 19.12.2025
(51) Int. Cl.: G06N 3/045, G06N 3/0455, G06N 3/08

(54) **REDUCING FALSE RATIOS IN ANOMALY CLASSIFICATION**

(30) Priority: 07.01.2025 FI 20255007
(71) Applicant: Nokia Solutions and Networks Oy, 02610 Espoo (FI)
(72) Inventor: HOJJATINIA, Sina, Massy (FR); MONSHIZADEH, Mehrnoosh, Saint Germain les Arpajon (FR); KHATRI, Vikramajeet, Espoo (FI); PAPILLON, Serge, Paris (FR)
(74) Representative: Bryers Intellectual Property Ltd

(57) **Abstract**

Apparatus and method of anomaly classification. In an embodiment, the apparatus performs binary classification of data samples in a dataset to classify the data samples into a normal group or an anomalous group, performs multiclass classification to classify the data samples of the anomalous group into anomaly classes, and identifying a set of the data samples in the anomalous group as false positives resulting from the binary classification when the multiclass classification fails to classify the data samples of the first set into one of the anomaly classes.

## Description

### Technical Field

This disclosure is related to the field of data science, and more particularly, to machine learning models trained to detect and/or classify anomalies.

### Background

Today, diverse sets of data are collected from a variety of sources. For example, service delivery systems that provide services such as mobile telecommunication services, software systems, such as social media platforms, e-commerce websites, search engines, and cloud systems, and/or other types of systems generate logs or other data that describe their operation (e.g., runtime information). Anomaly detection is used across various domains to detect or flag abnormal patterns or events within data. Detecting and/or classifying anomalies in a prompt manner enhances safety, security, and efficiency. Consequently, evaluation metrics such as False Positive Rate (FPR) and False Negative Rate (FNR) are important for assessing system performance. A false positive is a result that incorrectly indicates an anomaly or abnormality in data. False positives may cause serious issues in cybersecurity, autonomous vehicles, industrial control systems, public security, etc., leading to operational disruptions. A false negative is a result that incorrectly indicates the absence of an anomaly or abnormality in data. False negatives result in missed anomalies, which risk overlooked threats, system failures, and security breaches. Thus, it remains a problem to effectively reduce False Positives (FP) and False Negatives (FN) in anomaly detection/classification.

### Summary

Described herein are an enhanced data analysis system and associated method of data analysis. As an overview, a data analysis system as described herein uses a multi-layer architecture or approach in analyzing a dataset for anomalies. One layer uses binary classification to classify data samples of the dataset into one of two groups or classes: a normal group (or class) of "normal" samples, or an anomalous group (or class) of anomalous or abnormal samples. Another layer uses multiclass classification to classify the data samples of the anomalous group (or class) output from the binary classification layer into one of a plurality (e.g., three or more) of anomaly classes (or anomaly subclasses). One technical benefit is the multiclass classification layer is able to effectively identify and recover false positives identified in the binary classification layer. Thus, the False Positive Rate (FPR) of the data analysis system may be reduced.

The multi-layer architecture of the data analyzer may further include another layer that uses anomaly detection. This layer may perform anomaly detection on data samples of the normal group (or class) output from the binary classification layer and/or on data samples classified as normal or unknown by the multiclass classification layer. One technical benefit is the anomaly detection layer is able to effectively identify and recover false negatives identified in the binary classification layer and/or the multiclass classification layer. Thus, the False Negative Rate (FNR) of the data analysis system may be reduced.

In an embodiment (also referred to as an aspect), an apparatus comprises at least one processor, and at least one memory storing instructions that, when executed by the at least one processor, cause the apparatus at least to perform: performing binary classification of data samples in a dataset to classify the data samples into a normal group or an anomalous group, performing multiclass classification to classify the data samples of the anomalous group into anomaly classes, and identifying a first set of the data samples in the anomalous group as false positives resulting from the binary classification when the multiclass classification fails to classify the data samples of the first set into one of the anomaly classes.

In an embodiment, the instructions when executed by the at least one processor, cause the apparatus at least to perform: performing anomaly detection on the data samples of the normal group, identifying a second set of the data samples in the normal group as false negatives resulting from the binary classification when the anomaly detection detects anomalies in the data samples of the second set, and adding the data samples of the second set to the anomalous group for the multiclass classification.

In an embodiment, the instructions when executed by the at least one processor, cause the apparatus at least to perform: performing anomaly detection on the data samples of the first set identified as false positives, verifying one or more of the data samples of the first set as false positives resulting from the binary classification when the anomaly detection does not detect anomalies in the one or more of the data samples of the first set, and/or identifying one or more of the data samples of the first set as false negatives resulting from the multiclass classification when the anomaly detection detects anomalies in the one or more of the data samples of the first set.

In an embodiment, a method comprises performing binary classification of data samples in a dataset to classify the data samples into a normal group or an anomalous group, performing multiclass classification to classify the data samples of the anomalous group into anomaly classes, and identifying a first set of the data samples in the anomalous group as false positives resulting from the binary classification when the multiclass classification fails to classify the data samples of the first set into one of the anomaly classes.

In an embodiment, the method comprises performing anomaly detection on the data samples of the normal group, identifying a second set of the data samples in the normal group as false negatives resulting from the binary classification when the anomaly detection detects anomalies in the data samples of the second set, and adding the data samples of the second set to the anomalous group for the multiclass classification.

In an embodiment, the method comprises performing anomaly detection on the data samples of the first set identified as false positives, verifying one or more of the data samples of the first set as false positives resulting from the binary classification when the anomaly detection does not detect anomalies in the one or more of the data samples of the first set, and/or identifying one or more of the data samples of the first set as false negatives resulting from the multiclass classification when the anomaly detection detects anomalies in the one or more of the data samples of the first set.

Other embodiments may include computer readable media, other systems, or other methods as described below.

The above summary provides a basic understanding of some aspects of the specification. This summary is not an extensive overview of the specification. It is intended to neither identify key or critical elements of the specification nor delineate any scope of the particular embodiments of the specification, or any scope of the claims. Its sole purpose is to present some concepts of the specification in a simplified form as a prelude to the more detailed description that is presented later.

### Description of the Drawings

Some embodiments of the invention are now described, by way of example only, and with reference to the accompanying drawings. The same reference number represents the same element or the same type of element on all drawings.
FIG. 1 is a block diagram illustrating a data analytics paradigm in an illustrative embodiment.
FIG. 2 is a block diagram of a data analysis system in an illustrative embodiment.
FIG. 3 is a flow chart illustrating a method of anomaly classification in an illustrative embodiment.
FIG. 4 is a block diagram illustrating a data analyzer in an illustrative embodiment.
FIG. 5 is a block diagram illustrating anomaly classification in a data analyzer in an illustrative embodiment.
FIG. 6 is a flow chart illustrating a method of anomaly classification in an illustrative embodiment.
FIG. 7 is a block diagram illustrating a data analyzer in another illustrative embodiment.
FIG. 8 is a block diagram illustrating anomaly classification in a data analyzer in an illustrative embodiment.
FIG. 9 is a flow chart illustrating a method of anomaly classification in an illustrative embodiment.
FIG. 10 is a block diagram illustrating anomaly classification in a data analyzer in an illustrative embodiment.
FIG. 11 is a flow chart illustrating a method of anomaly classification in an illustrative embodiment.
FIG. 12 is a block diagram illustrating a data analyzer in an illustrative embodiment.
FIG. 13 is a schematic diagram illustrating training and deployment of machine learning models in an illustrative embodiment.
FIG. 14 is a schematic diagram illustrating training and deployment of an autoencoder in an illustrative embodiment.
FIG. 15 is a schematic diagram illustrating re-training of machine learning models in an illustrative embodiment.
FIG. 16 is a flow chart illustrating a method of training a binary classifier model in an illustrative embodiment.
FIG. 17 is a flow chart illustrating a method of training a multiclass classifier model in an illustrative embodiment.
FIG. 18 is a schematic diagram illustrating re-training of an autoencoder in an illustrative embodiment.
FIG. 19 is a flow chart illustrating a method of training an autoencoder in an illustrative embodiment.

### Description of Embodiments

The figures and the following description illustrate specific exemplary embodiments. It will thus be appreciated that those skilled in the art will be able to devise various arrangements that, although not explicitly described or shown herein, embody the principles of the embodiments and are included within the scope of the embodiments. Furthermore, any examples described herein are intended to aid in understanding the principles of the embodiments, and are to be construed as being without limitation to such specifically recited examples and conditions. As a result, the inventive concept(s) is not limited to the specific embodiments or examples described below, but by the claims and their equivalents.

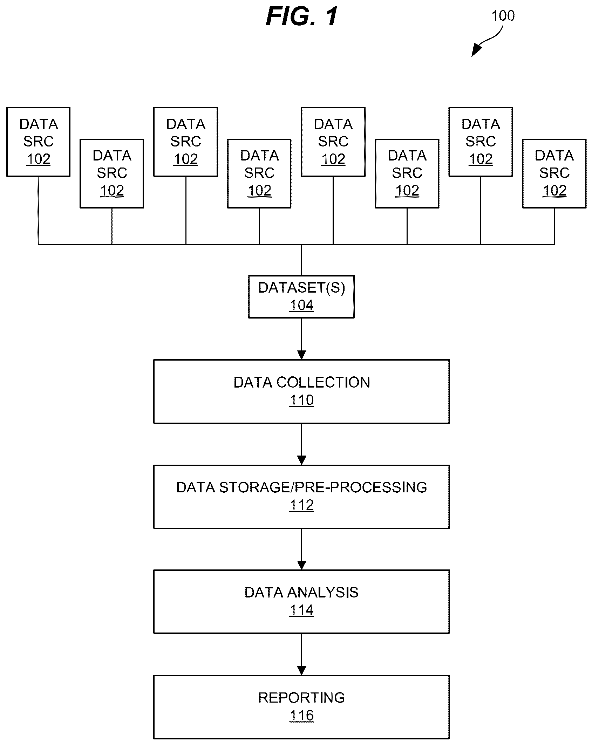

FIG. 1 is a block diagram illustrating a data analytics paradigm 100 in an illustrative embodiment. In general, the data analytics paradigm 100 begins with data collection 110 or data ingestion of data from one or more data sources 102. In data collection 110, one or more datasets 104 are received from the data source(s) 102. The dataset(s) 104 may be structured data, unstructured data, semi-structured data, etc. For example, the data sources 102 may comprise devices, equipment, servers, network elements, processing elements, hardware elements, software modules, applications, programs, cloud-based applications, etc., configured to perform actions, operations, activities, services, etc., and generate or output log files, runtime information, packets (e.g., Internet Protocol (IP)), video, audio, images, Internet of Things (IoT) data, and/or other data.

The data analytics paradigm 100 may further include data storage and pre-processing 112. The data ingested may be heterogeneous data with variability of data types, formats, and/or structures. Thus, the data may be cleaned, transformed, combined, etc., before loading into an appropriate data repository. Data analysis 114 refers to techniques used to evaluate, process, or otherwise analyze data to extract or derive inferences or insights from the data. Reporting 116 refers to communication of any inferences or insights extracted or derived from the data, such as physical or digital documents, data visualizations, etc.

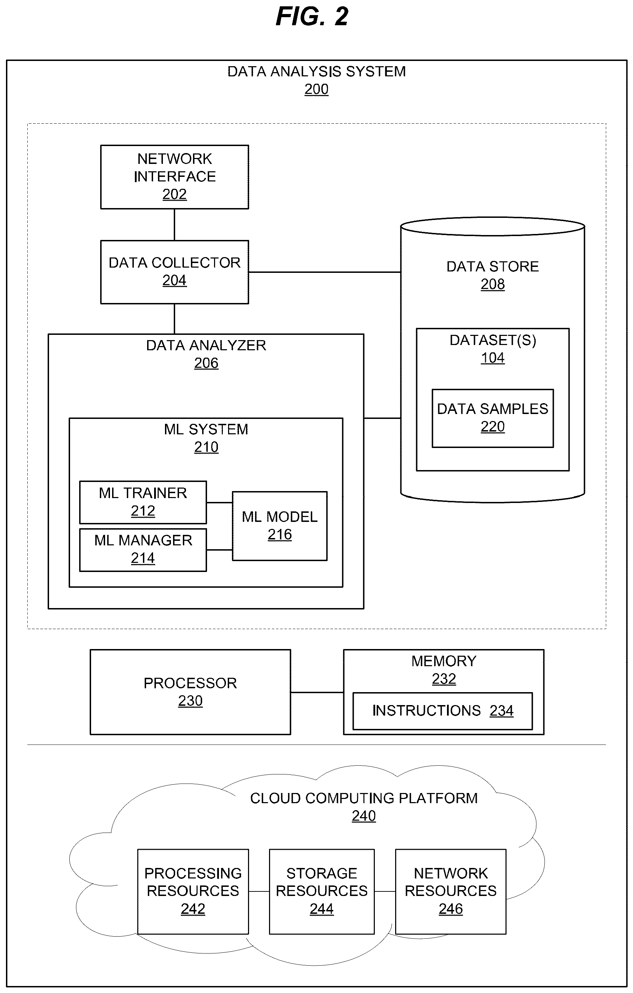

FIG. 2 is a block diagram of a data analysis system 200 in an illustrative embodiment. Data analysis system 200 is a data processing system, apparatus, application, means, etc., configured to perform analysis, reporting, etc., on one or more datasets 104. In an embodiment, data analysis system 200 may include the following subsystems: a network interface component 202, a data collector 204, a data analyzer 206, and a data store 208. Network interface component 202 is a hardware component or circuitry that exchanges messages, packets, data, etc., with other elements over a network connection. Network interface component 202 may use a variety of protocols, Application Programming Interfaces (APIs), etc., for communication. Data collector 204 comprises circuitry, logic, hardware, means, etc., configured to collect data for analysis. Data analyzer 206 comprises circuitry, logic, hardware, means, etc., configured to analyze, examine, or monitor data. Example operations of data analyzer 206 are described in further detail below.

In an embodiment, data analyzer 206 may implement one or more machine learning (ML) systems 210 for analyzing data. An ML system 210 may comprise circuitry, logic, hardware, software, means, etc., configured to use machine learning techniques to perform functions described for data analyzer 206. In an embodiment, one or more ML models 216 are trained for ML system 210. In general, an ML model 216 is a program or algorithm that learns from training samples to identify patterns or make decisions. ML system 210 may further include an ML trainer 212 and an ML manager 214. ML trainer 212 may comprise circuitry, logic, hardware, means, etc., configured to train and/or re-train one or more ML models 216. ML manager 214 may comprise circuitry, logic, hardware, means, etc., configured to manage one or more ML models 216 as trained. For example, ML manager 214 may be configured to input data into a trained ML model 216 during testing or after deployment, and receive output from the ML model 216, along with other functions.

Data store 208 comprises a repository configured to store data, such as an ingested dataset(s) 104 collected by data collector 204, training data for ML model 216, and/or other data.

One or more of the subsystems of data analysis system 200 may be implemented on a hardware platform comprised of analog and/or digital circuitry. One or more of the subsystems of data analysis system 200 may be implemented on a processor 230 that executes instructions 234 stored in memory 232. A processor 230 comprises an integrated hardware circuit configured to execute instructions 234 to provide the functions of data analysis system 200. Processor 230 may comprise a set of one or more processors or may comprise a multi-processor core, depending on the particular implementation. Memory 232 is a non-transitory computer readable medium for data, instructions, applications, etc., and is accessible by processor 230. Memory 232 is a hardware storage device capable of storing information on a temporary basis and/or a permanent basis. Memory 232 may comprise a random-access memory, or any other volatile or non-volatile storage device.

One or more of the subsystems of data analysis system 200 may be implemented on cloud computing platform 240 (e.g., Amazon Web Services (AWS)) or another type of processing platform. Cloud resources may be provisioned on cloud computing platform 240, such as processing resources 242 (e.g., physical or hardware processors, a server, a virtual server or virtual machine (VM), a virtual central processing unit (vCPU), etc.), storage resources 244 (e.g., physical or hardware storage, virtual storage, etc.), and/or networking resources 246, although other resources are considered herein. Data analysis system 200 may be built upon the provisioned resources with instructions, programming, code, etc. For example, network interface component 202 may be provisioned on networking resources 246, data collector 204 and/or data analyzer 206 may be provisioned on processing resources 242, and data store 208 may be provisioned on storage resources 244.

Data analysis system 200 may include various other components not specifically illustrated in FIG. 2.

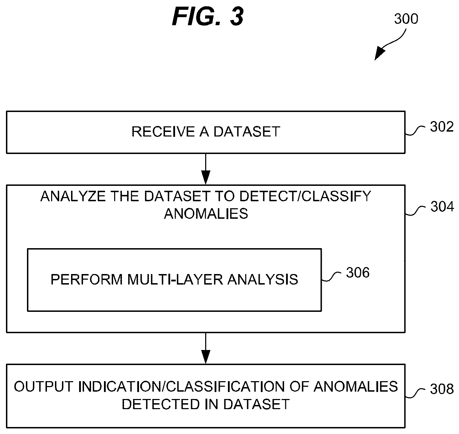

In an embodiment, data analysis system 200 is configured to perform anomaly detection/classification on a dataset 104 (or multiple datasets). FIG. 3 is a flow chart illustrating a method 300 of anomaly classification in an illustrative embodiment. The steps of method 300 will be described with reference to data analysis system 200 in FIG. 2, but those skilled in the art will appreciate that method 300 may be performed in other systems or devices. Also, the steps of the flow charts described herein are not all inclusive and may include other steps not shown, and the steps may be performed in an alternative order.

Data analysis system 200 (e.g., through network interface 202) receives a dataset 104 (step 302). As illustrated in FIG. 2, the dataset 104 comprises a plurality of elements referred to as data samples 220. Data samples 220 may comprise log messages, network traffic, packets, bytes, images, etc. Data analysis system 200 (e.g., through data analyzer 206) then analyzes the dataset 104 to detect and/or classify one or more anomalies (step 304). An anomaly is something that deviates from what is normal, standard, or expected. Data analysis system 200 then outputs an indication or classification of any anomalies detected in the dataset 104 (step 308). For example, data analysis system 200 may generate a report describing the anomalies, may display anomaly information on a user interface or the like, may generate an alert or an alarm, may flag data containing anomalies or abnormal patterns, etc.

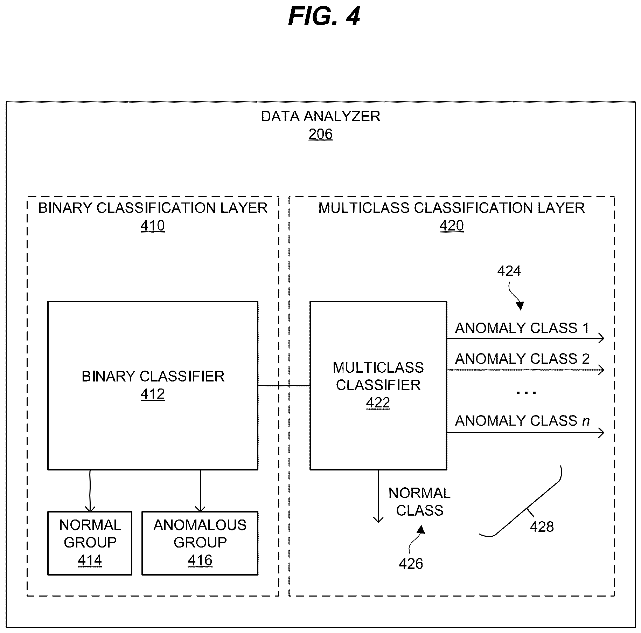

The performance of data analysis system 200 is enhanced over prior systems in detecting or classifying anomalies, such as in terms of False Negative Rate (FNR) and/or False Positive Rate (FPR), by implementing or performing multi-layer analysis (step 306). FIG. 4 is a block diagram illustrating a data analyzer 206 in an illustrative embodiment. Data analyzer 206 is configured for multi-layer analysis through a binary classification layer 410 and a multiclass classification layer 420. The binary classification layer 410 comprises one or more binary classifiers 412. A binary classifier 412 is configured to perform binary classification, which is the task of classifying the elements/samples of a set into one of two groups or classes. In an embodiment, a binary classifier 412 is configured to classify elements/samples into one of a normal group 414 or an anomalous group 416. The normal group 414 (also referred to as a normal class) is a class of samples that are normal, standard, or expected based on classification of the binary classifier 412. The anomalous group 416 (also referred to as an anomalous class) is a class of samples that deviate from normal, standard, or expected based on classification of the binary classifier 412.

The multiclass classification layer 420 comprises one or more multiclass classifiers 422. A multiclass classifier 422 is configured to perform multiclass classification (or multinomial classification), which is the task of classifying elements/samples of a set into one of three or more classes 428 (also referred to as multiclass classes, predetermined classes, subclasses, etc.). In an embodiment, a multiclass classifier 422 may be configured to classify elements/samples into one of a plurality of predefined anomaly classes 424 or anomaly subclasses (e.g., anomaly class 1, anomaly class 2,..., anomaly class n), a normal class 426, etc.

The data analysis system 200 described herein provides an intelligent and automated solution to enhance the reliability of data processing and minimizing the false ratios.

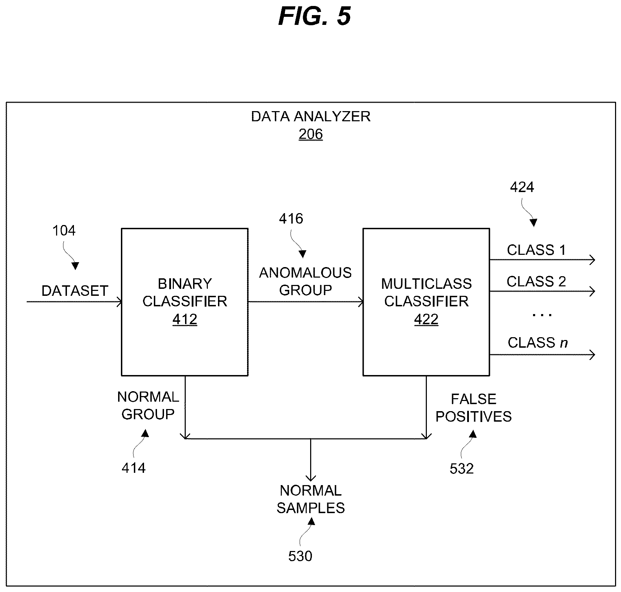

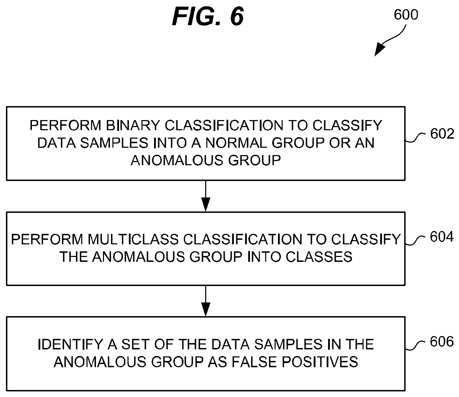

FIG. 5 is a block diagram illustrating anomaly classification in data analyzer 206 in an illustrative embodiment. FIG. 6 is a flow chart illustrating a method 600 of anomaly classification in an illustrative embodiment. In FIG. 5, data analyzer 206 receives a dataset 104 comprises a plurality of data samples 220. The data samples 220 of the dataset 104 are input into the binary classifier 412, where the binary classifier 412 performs binary classification of the data samples 220 to classify the data samples 220 into a normal group 414 or an anomalous group 416 (see step 602 of FIG. 6). In other words, binary classifier 412 classifies each data sample 220 into one of the normal group 414 or the anomalous group 416. The output of binary classifier 412 is therefore data samples 220 each classified into one of a normal group 414 (or normal class) or an anomalous group 416 (or anomalous class). In an embodiment, data analyzer 206 may consider or identify the data samples 220 of the normal group 414 as normal samples 530.

The data samples 220 of the anomalous group 416 (i.e., as classified by the binary classifier 412) are input into the multiclass classifier 422, where the multiclass classifier 422 performs multiclass classification to classify the data samples 220 of the anomalous group 416 into classes 428 (see step 604 of FIG. 6). In other words, multiclass classifier 422 attempts to classify each data sample 220 of the anomalous group 416 into one of the anomaly classes 424 (or anomaly subclasses), into the normal class 426, etc. Data analyzer 206 may identify a set of one or more data samples 220 (referred to as a first set) in the anomalous group 416 as false positives 532 (FPs) resulting from binary classification when the multiclass classification fails to classify the data samples 220 of the first set into one of the anomaly classes 424 (see step 606 of FIG. 6). For example, multiclass classifier 422 may classify one or more data samples 220 in the anomalous group 416 as the normal class 426. Data analyzer 206 will therefore identify the data samples 220 of the normal class 426 (as classified by the multiclass classifier 422) as false positives 532 resulting from binary classification. In another example, multiclass classifier 422 may not be able to classify one or more data samples 220 in the anomalous group 416 into one of the anomaly classes 424 or the normal class 426 with a certainty or confidence level that exceeds a predetermined threshold (e.g., 85%, 90%, 95%, etc.). When multiclass classifier 422 fails or is unable to classify data samples 220 in the anomalous group 416 into one of the anomaly classes 424 with a confidence level that exceeds a predetermined threshold, data analyzer 206 identifies these data samples 220 in the anomalous group 416 as false positives 532 resulting from binary classification. The output of multiclass classifier 422 is therefore data samples 220 identified as false positives 532 or as one of the anomaly classes 424. In an embodiment, the false positives 532 may be considered recovered and part of the normal samples 530. One technical benefit is data analyzer 206 uses the multiclass classifier 422 to recover false positives 532 from the binary classifier 412. Thus, the False Positive Rate (FPR) of the data analyzer 206 is reduced.

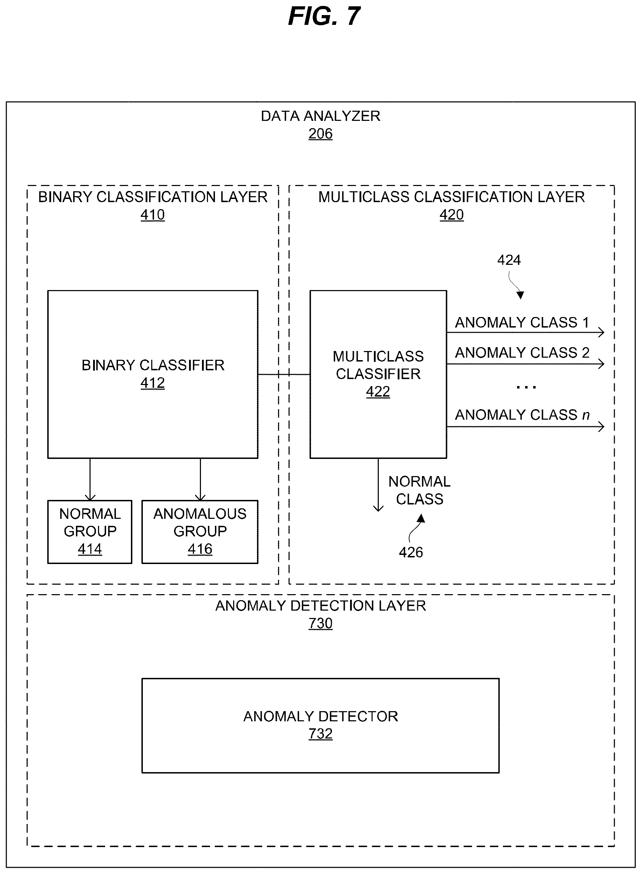

FIG. 7 is a block diagram illustrating a data analyzer 206 in another illustrative embodiment. In an embodiment, data analyzer 206 is configured for multi-layer analysis through binary classification layer 410, multiclass classification layer 420, and an anomaly detection layer 730. The anomaly detection layer 730 comprises one or more anomaly detectors 732. An anomaly detector 732 is configured to detect anomalies or abnormalities in elements/samples.

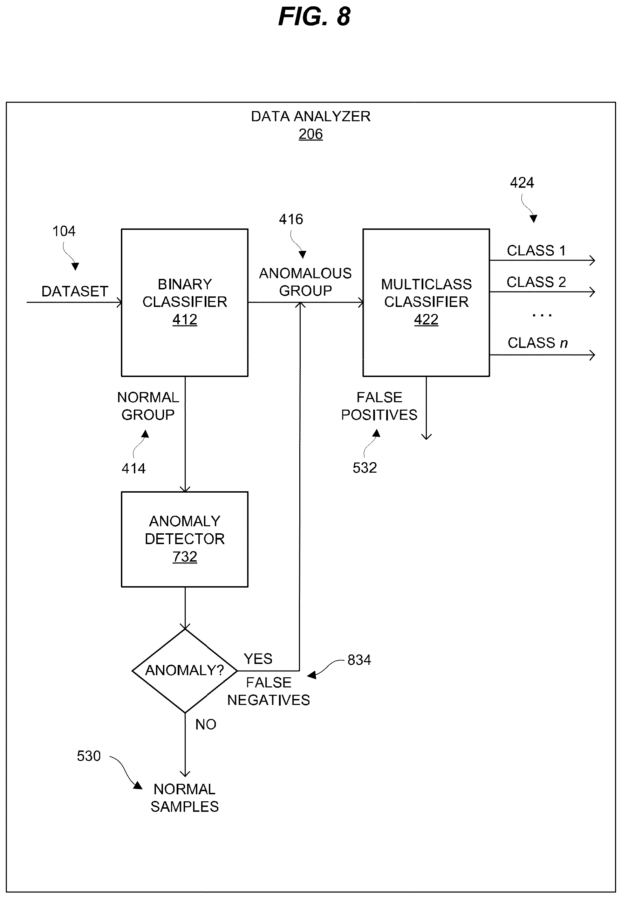

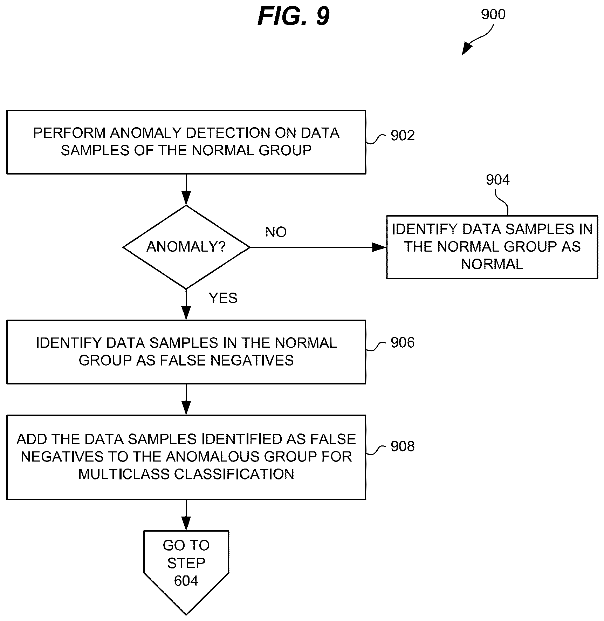

FIG. 8 is a block diagram illustrating anomaly classification in data analyzer 206 in an illustrative embodiment. FIG. 9 is a flow chart illustrating a method 900 of anomaly classification in an illustrative embodiment. In FIG. 8, data analyzer 206 receives a dataset 104 comprises a plurality of data samples 220, which are input into the binary classifier 412. Binary classifier 412 performs binary classification of the data samples 220 to classify the data samples 220 into a normal group 414 or an anomalous group 416 (see step 602 of FIG 6). The data samples 220 of the anomalous group 416 (i.e., as classified by the binary classifier 412) are input into the multiclass classifier 422, where the multiclass classifier 422 performs multiclass classification to classify the data samples 220 of the anomalous group 416 into classes 428 (see step 604 of FIG. 6), such as anomaly classes 424. Data analyzer 206 identifies a set of one or more data samples 220 (referred to as a first set) in the anomalous group 416 as false positives 532 resulting from binary classification (see step 606 of FIG. 6).

The anomaly detector 732 is configured to verify classifications of the binary classifier 412. Thus, the data samples 220 of the normal group 414 are input into the anomaly detector 732, where anomaly detector 732 performs anomaly detection on the data samples 220 of the normal group 414 (see step 902 of FIG. 9). In other words, anomaly detector 732 may process each data sample 220 of the normal group 414 to determine whether the data sample 220 comprises an anomaly. When anomaly detector 732 does not detect anomalies in data samples 220 of the normal group 414, data analyzer 206 may consider or identify those data samples 220 as normal samples 530 (see step 904 of FIG. 9). In some instances, anomaly detector 732 may detect an anomaly in one or more of the data samples 220 (also referred to as a second set of data samples 220) of the normal group 414. When anomaly detector 732 detects anomalies in data samples 220 of the second set, data analyzer 206 identifies the data samples 220 of the second set as false negatives 834 (FNs) resulting from the binary classification (see step 906 of FIG. 9). Data analyzer 206 may then add the data samples 220 of the second set to the anomalous group 416 for multiclass classification (see step 908 in FIG. 6). Processing may return to step 604 of FIG. 6 where the multiclass classifier 422 performs multiclass classification to classify the false negatives 834 into classes 428 (see step 604 of FIG. 6). Thus, the false negatives 834 from the binary classifier 412 identified by the anomaly detector 732 are input to the multiclass classifier 422 to attempt to classify each of the false negatives 834 into one of the anomaly classes 424, into the normal class 426, etc. One technical benefit is data analyzer 206 uses the anomaly detector 732 to recover false negatives 834 from the binary classifier 412. Thus, the False Negative Rate (FNR) of the data analyzer 206 is reduced.

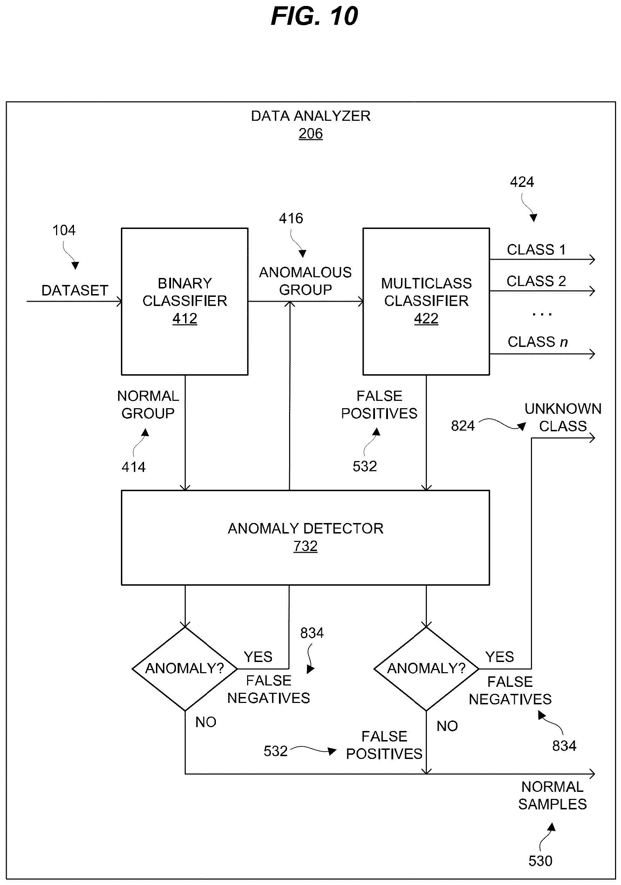

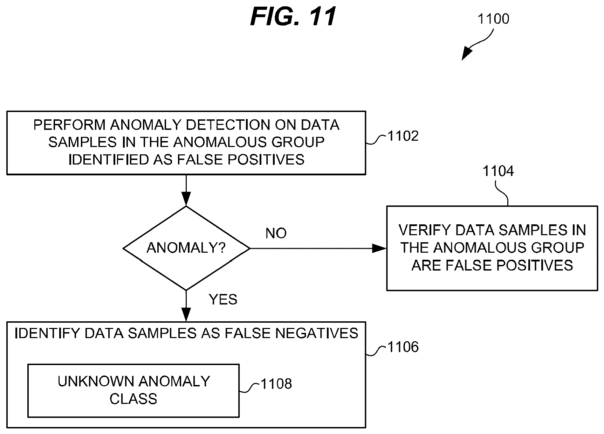

FIG. 10 is a block diagram illustrating anomaly classification in data analyzer 206 in an illustrative embodiment. FIG. 11 is a flow chart illustrating a method 1100 of anomaly classification in an illustrative embodiment. The anomaly detector 732 is configured to verify classifications of the multiclass classifier 422. In FIG. 10, as described above, the multiclass classifier 422 outputs a first set of data samples 220 identified as false positives 532. The first set of data samples 220 are input into the anomaly detector 732, where anomaly detector 732 performs anomaly detection on the data samples 220 of the first set (see step 1102 of FIG. 11). In other words, anomaly detector 732 may process each data sample 220 identified as a false positive 532 to determine whether the data sample 220 comprises an anomaly. When anomaly detector 732 does not detect anomalies in data samples 220 of the first set, data analyzer 206 verifies that these data samples of the first set are false positives 532 resulting from the binary classification (see step 1104 of FIG. 11). In some instances, anomaly detector 732 may detect an anomaly in one or more of the data samples 220 (also referred to as a third set of data samples 220) of the first set. When anomaly detector 732 detects anomalies in the data samples 220 of the first set, data analyzer 206 identifies these data samples 220 as false negatives 834 resulting from the multiclass classification (see step 1106 of FIG. 11). Anomaly detector 732 may identify the third set of data samples 220, which are identified as false negatives 834, as comprising data samples 220 of an unknown anomaly class 824 in the multiclass classification or from the perspective of the multiclass classifier 422 (step 1108). One technical benefit is data analyzer 206 uses the anomaly detector 732 to recover false negatives 834 from the multiclass classifier 422. Thus, the False Negative Rate (FNR) of the data analyzer 206 is reduced.

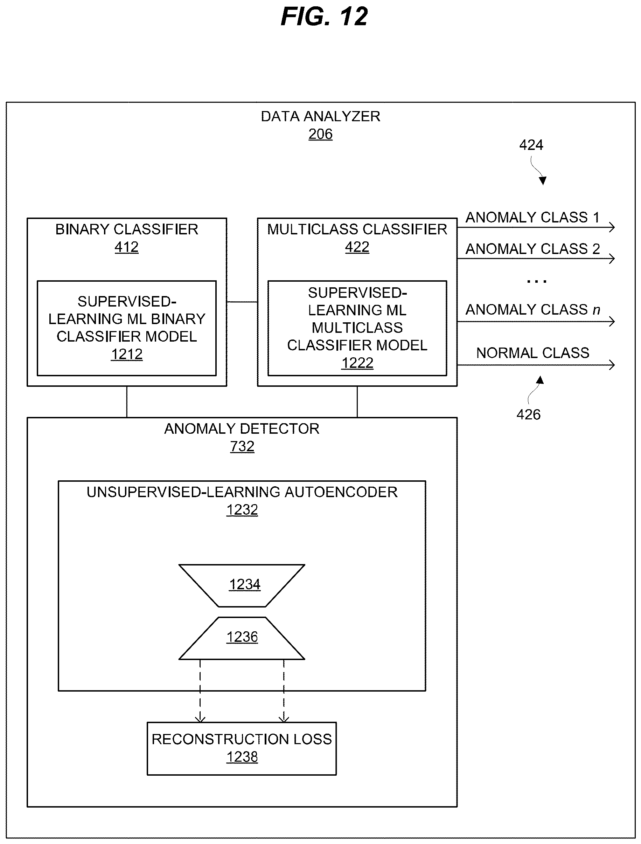

FIG. 12 is a block diagram illustrating a data analyzer 206 in an illustrative embodiment. In an embodiment, the binary classifier 412 may comprise a ML binary classifier model 1212. The ML binary classifier model 1212 is trained using supervised learning (i.e., supervised learning algorithm) to classify elements/samples of a set into one of two groups or classes (i.e., a normal group 414 or an anomalous group 416). Thus, the binary classification according to the ML binary classifier model 1212 may be referred to as supervised binary classification. Likewise, the multiclass classifier 422 may comprise a ML multiclass classifier model 1222. The ML multiclass classifier model 1222 is trained using supervised learning to classify elements/samples into one of a plurality (e.g., three or more) of classes 428 (e.g., normal class 426 or one of the anomaly classes 424). Thus, the multiclass classification according to the ML multiclass classifier model 1222 may be referred to as supervised multiclass classification.

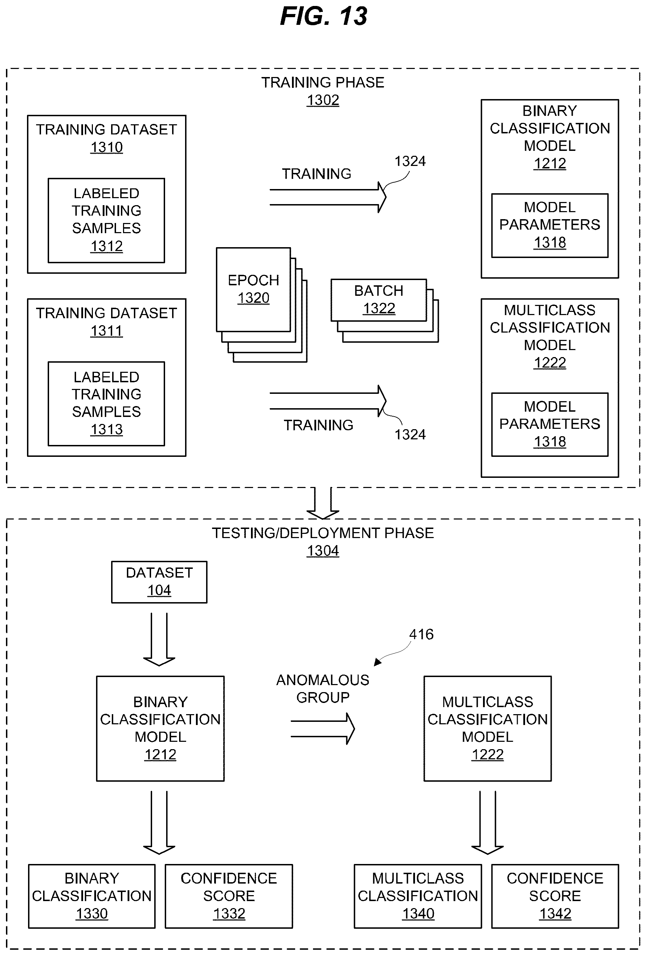

In general, supervised classification techniques through machine learning use training data with a "complete" set of "normal" and "abnormal" labels. FIG. 13 is a schematic diagram illustrating training and deployment of machine learning models in an illustrative embodiment. Data analysis system 200 may operate in a training phase 1302, and a testing or deployment phase 1304. In the training phase 1302, ML trainer 212, for example, operates to train a ML binary classifier model 1212 and ML multiclass classifier model 1222, which are examples of ML models 216 as illustrated in FIG. 2. ML trainer 212 performs training 1324 of the ML binary classifier model 1212 using labeled training samples 1312 of a training dataset 1310, and performs training 1324 of the ML multiclass classifier model 1222 using labeled training samples 1313 of a training dataset 1311. It is noted that although two training datasets 1310-1311 are illustrated, there may be overlap between the training datasets 1310-1311. During training 1324, ML trainer 212 may train the ML binary classifier model 1212 and ML multiclass classifier model 1222 over a plurality of epochs 1320, which is a single iteration of training on an entire training dataset. During an epoch 1320, ML binary classifier model 1212 sequentially processes the labeled training samples 1312 of the training dataset 1310, calculates loss or otherwise quantifies the predicted outputs, and updates model parameters 1318 (e.g., weights) accordingly. Likewise, the ML multiclass classifier model 1222 sequentially processes the labeled training samples 1313 of the training dataset 1311, calculates loss or otherwise quantifies the predicted outputs, and updates model parameters 1318 accordingly. The number of epochs 1320 determines how many times the ML binary classifier model 1212 and ML multiclass classifier model 1222 iterate through the entire training dataset 1310-1311, allowing them to learn and refine the model parameters 1318 over multiple passes. ML binary classifier model 1212 and ML multiclass classifier model 1222 are trained, within an epoch 1320, in batches 1322 of labeled training samples 1312-1313 from the training datasets 1310-1311. A batch 1322 is a number of training samples to work through before updating model parameters 1318.

In the testing/deployment phase 1304, ML manager 214, for example, may use the trained ML binary classifier model 1212 and the trained ML multiclass classifier model 1222 to classify data samples 220 of a dataset 104. For example, ML manager 214 may feed the dataset 104 into ML binary classifier model 1212 (as trained), and ML binary classifier model 1212 outputs binary classifications 1330 for the data samples 220 as belonging to either the normal group 414 or the anomalous group 416, and may output an associated confidence score 1332 for the binary classification 1330. ML manager 214 may then feed the data samples 220 of the anomalous group 416 into ML multiclass classifier model 1222 (as trained), and ML multiclass classifier model 1222 outputs multiclass classifications 1340 for the data samples 220 as either belonging to one of the anomaly classes 424, as belonging to the normal class 426, etc., and may output an associated confidence score 1342 for the multiclass classification 1340.

In FIG. 12, the anomaly detector 732 may comprise an autoencoder 1232. The autoencoder 1232 is trained using unsupervised learning (i.e., unsupervised learning algorithm) to perform anomaly detection (also referred to as outlier detection). Thus, anomaly detection as described herein may be referred to as unsupervised anomaly detection. In general, unsupervised learning techniques use unlabeled training data. Unsupervised anomaly detection may rest upon some basic assumptions that anomalies in data occur rarely, and the features of anomalies are significantly different from those of normal instances. In general, autoencoder 1232 is an artificial neural network comprising an encoder 1234 and a decoder 1236. The encoder 1234 is configured to transform input data (e.g., a data sample 220) into an encoded representation in latent space, and the decoder 1236 is configured to reconstruct the input data from the encoded representation. The autoencoder 1232 outputs a reconstruction loss 1238, which is a measure of how close the output of the decoder 1236 is to the input to the encoder 1234. The reconstruction loss 1238 therefore indicates whether an inputted data sample 220 to the autoencoder 1232 is anomalous or not. For example, when the reconstruction loss 1238 of a data sample 220 is greater than a threshold (e.g., a mean reconstruction loss of normal unlabeled samples used to train autoencoder 1232), autoencoder 1232 identifies an anomaly in the data sample 220.

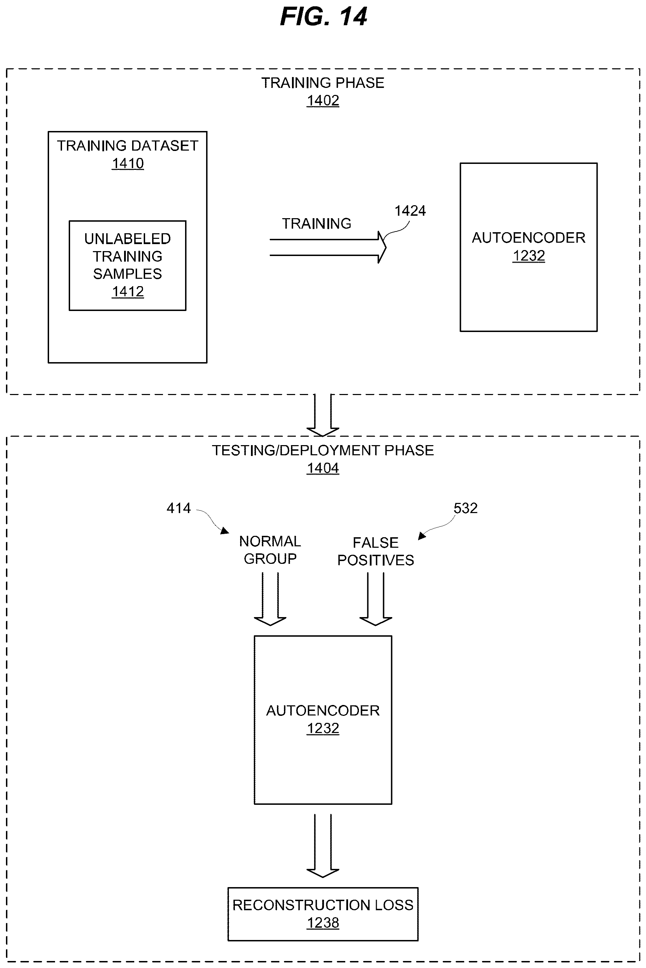

FIG. 14 is a schematic diagram illustrating training and deployment of an autoencoder 1232 in an illustrative embodiment. Data analysis system 200 may operate in a training phase 1402, and a testing or deployment phase 1404. In the training phase 1402, ML trainer 212, for example, operates to train autoencoder 1232, which is an example of an ML model 216 as illustrated in FIG. 2. ML trainer 212 performs training 1424 of the autoencoder 1232 using unlabeled training samples 1412 of a training dataset 1410. It is noted that although one training dataset 1410 is illustrated, multiple training datasets 1410 may be used. Training 1424 may be similar as described above.

In the testing/deployment phase 1404, ML manager 214, for example, may use the trained autoencoder 1232 to detect anomalies in data samples 220. For example, ML manager 214 may feed the data samples 220 of the normal group 414 and data samples 220 identified as false positives 532 into autoencoder 1232 (as trained), and autoencoder 1232 outputs reconstruction losses 1238 for the data samples 220. The reconstruction losses 1238 may be compared to thresholds to detect anomalies.

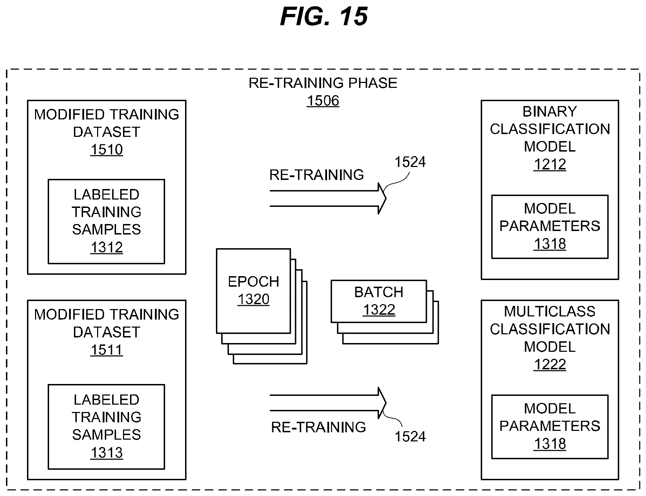

At some instances, the ML binary classifier model 1212 and the ML multiclass classifier model 1222 may be re-trained based on the results of the anomaly classification. FIG. 15 is a schematic diagram illustrating re-training of machine learning models in an illustrative embodiment. Data analysis system 200 may operate in a re-training phase 1506 to re-train one or both of the ML binary classifier model 1212 and the ML multiclass classifier model 1222. In the re-training phase 1506, one or more labeled training samples 1312 may be added or modified in the training dataset 1310 to generate a modified training dataset 1510. ML trainer 212 may perform re-training 1524 of the ML binary classifier model 1212 using the modified training dataset 1510. Likewise, one or more labeled training samples 1313 may be added or modified in the training dataset 1311 to generate a modified training dataset 1511. ML trainer 212 may perform re-training 1524 of the ML multiclass classifier model 1222 using the modified training dataset 1511. During re-training 1524, ML trainer 212 may re-train the ML binary classifier model 1212 and/or ML multiclass classifier model 1222 over a plurality of epochs 1320, in batches 1322 of labeled training samples 1312-1313 from the modified training dataset 1510-1511, etc., as described above for training 1324.

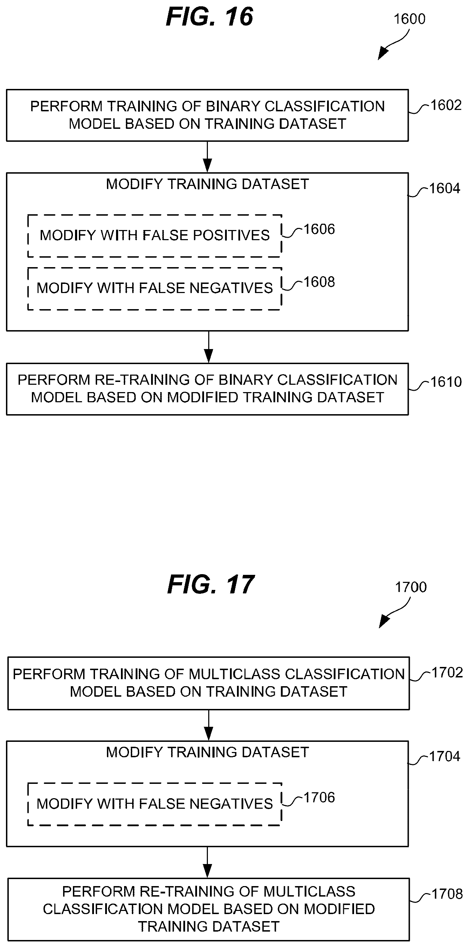

FIG. 16 is a flow chart illustrating a method 1600 of training a ML binary classifier model 1212 in an illustrative embodiment. ML trainer 212 performs training 1324 of the ML binary classifier model 1212 using labeled training samples 1312 of a training dataset 1310 (step 1602). After training, ML manager 214 may use the trained ML binary classifier model 1212 to classify data samples 220 as described above. At some point, ML trainer 212 may modify the training dataset 1310 (step 1604), and perform re-training 1524 of the ML binary classifier model 1212 using the modified training dataset 1510 (step 1610). For example, ML trainer 212 may modify the training dataset 1310 based on one or more data samples 220 identified as false positives 532 in the anomaly classification along with correct labels (optional step 1606). In another example, ML trainer 212 may modify the training dataset 1310 based on one or more data samples 220 identified as false negatives 834 in the anomaly classification along with correct labels (optional step 1608). One technical benefit is the accuracy of the ML binary classifier model 1212 may be improved.

FIG. 17 is a flow chart illustrating a method 1700 of training a ML multiclass classifier model 1222 in an illustrative embodiment. ML trainer 212 performs training 1324 of the ML multiclass classifier model 1222 using labeled training samples 1313 of a training dataset 1311 (step 1702). After training, ML manager 214 may use the trained ML multiclass classifier model 1222 to classify data samples 220 as described above. At some point, ML trainer 212 may modify the training dataset 1311 (step 1704), and perform re-training 1524 of the ML multiclass classifier model 1222 using the modified training dataset 1511 (step 1708). For example, ML trainer 212 may modify the training dataset 1311 based on one or more data samples 220 identified as false negatives 834 in the anomaly classification along with correct labels (optional step 1706). When unknown anomaly classes 824 (see FIG. 10) are identified by ML multiclass classifier model 1222, one or more data samples 220 of the unknown anomaly classes 824 may be provided to a rater or the like to assign labels to the data samples 220, which creates new labeled training samples 1313 that may be added to the training dataset 1311.

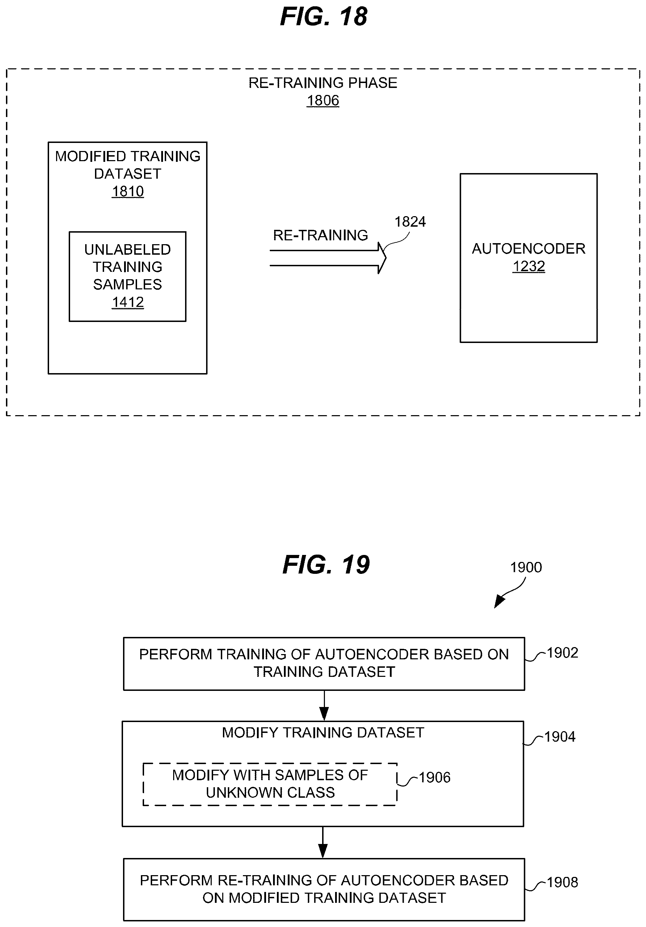

At some instances, the autoencoder 1232 may be re-trained based on the results of the anomaly classification. FIG. 18 is a schematic diagram illustrating re-training of an autoencoder 1232 in an illustrative embodiment. Data analysis system 200 may operate in a re-training phase 1806 to re-train autoencoder 1232. In the re-training phase 1806, one or more unlabeled training samples 1412 may be added or modified in the training dataset 1410 to generate a modified training dataset 1810. ML trainer 212 may perform re-training 1824 of the autoencoder 1232 using the modified training dataset 1810.

FIG. 19 is a flow chart illustrating a method 1900 of training an autoencoder 1232 in an illustrative embodiment. ML trainer 212 performs training 1324 of the autoencoder 1232 using unlabeled training samples 1412 of a training dataset 1410 (step 1902). After training, ML manager 214 may use the trained autoencoder 1232 to detect anomalies in data samples 220 as described above. At some point, ML trainer 212 may modify the training dataset 1410 (step 1904), and perform re-training 1824 of the autoencoder 1232 using the modified training dataset 1810 (step 1908). For example, ML trainer 212 may modify the training dataset 1410 based on one or more data samples 220 identified as of an unknown anomaly class 824 in the multiclass classification or from the perspective of the multiclass classifier 422 (step 1906). A data sample 220 of an unknown anomaly class 824 is far different from a normal sample 530, even if the multiclass classifier 422 is unable to identify the data sample 220 as a specific anomaly class 424. Therefore, the data samples 220 of an unknown anomaly class 824 may be used as unlabeled training samples 1412. The data samples 220 of an unknown anomaly class 824 may be clustered using a clustering algorithm. In order to provide more discriminative features to perform the clustering as efficiently as possible to have the least overlapping issue in the end, ML trainer 212 may concatenate the confidence scores 1342 of each anomaly class 424 of the multiclass classifier 422 to the current feature vector of the unknown data sample. This represents the probability of similarity of each anomaly class 424 to the unknown data sample. The probability of similarity of each anomaly class 424 to the unknown data sample will help the clustering algorithm to compare the data samples 220 in terms of distance-based similarity metrics efficiently, and will result in better clustering result of unknown data samples. One technical benefit is the accuracy of autoencoder 1232 may be improved.

Any of the various elements or modules shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

As used in this application, the term "circuitry" may refer to one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although specific embodiments were described herein, the scope of the disclosure is not limited to those specific embodiments. The scope of the disclosure is defined by the following claims and any equivalents thereof.

## Claims

1. An apparatus, comprising:
at least one processor; and
at least one memory storing instructions that, when executed by the at least one processor, cause the apparatus at least to perform:
performing binary classification of data samples in a dataset to classify the data samples into a normal group or an anomalous group;
performing multiclass classification to classify the data samples of the anomalous group into anomaly classes; and
identifying a first set of the data samples in the anomalous group as false positives resulting from the binary classification when the multiclass classification fails to classify the data samples of the first set into one of the anomaly classes.

2. The apparatus of claim 1, wherein the instructions when executed by the at least one processor, cause the apparatus at least to perform:
performing anomaly detection on the data samples of the normal group;
identifying a second set of the data samples in the normal group as false negatives resulting from the binary classification when the anomaly detection detects anomalies in the data samples of the second set; and
adding the data samples of the second set to the anomalous group for the multiclass classification.

3. The apparatus of any of claims 1 to 2, wherein the instructions when executed by the at least one processor, cause the apparatus at least to perform:
performing anomaly detection on the data samples of the first set identified as false positives; and
verifying one or more of the data samples of the first set as false positives resulting from the binary classification when the anomaly detection does not detect anomalies in the one or more of the data samples of the first set.

4. The apparatus of any of claims 1 to 2, wherein the instructions when executed by the at least one processor, cause the apparatus at least to perform:
performing anomaly detection on the data samples of the first set identified as false positives; and
identifying one or more of the data samples of the first set as false negatives resulting from the multiclass classification when the anomaly detection detects anomalies in the one or more of the data samples of the first set.

5. The apparatus of claim 4, wherein:
the one or more of the data samples of the first set identified as false negatives comprise the data samples of an unknown anomaly class in the multiclass classification.

6. The apparatus of claim 4, wherein:
the binary classification is performed with a machine learning binary classifier model trained using supervised learning; and
the instructions when executed by the at least one processor, cause the apparatus at least to perform:
re-training the machine learning binary classifier model using one or more of the data samples of the first set identified as false positives along with correct labels.

7. The apparatus of claim 6, wherein the instructions when executed by the at least one processor, cause the apparatus at least to perform:
re-training the machine learning binary classifier model using one or more of the data samples of the second set identified as false negatives along with correct labels.

8. The apparatus of claim 4, wherein:
the multiclass classification is performed with a machine learning multiclass classifier model trained using supervised learning; and
the instructions when executed by the at least one processor, cause the apparatus at least to perform:
re-training the machine learning multiclass classifier model using one or more of the data samples of the first set identified as false negatives along with correct labels.

9. The apparatus of claim 4, wherein:
the anomaly detection is performed with an autoencoder; and
the instructions when executed by the at least one processor, cause the apparatus at least to perform:
re-training the autoencoder using one or more of the data samples of the first set identified as false negatives.

10. The apparatus of claim 2, wherein:
the binary classification is performed in a binary classifier trained through supervised learning;
the multiclass classification is performed in a multiclass classifier trained through supervised learning; and
the anomaly detection is performed in an autoencoder trained through unsupervised learning.

11. A method comprising:
performing binary classification of data samples in a dataset to classify the data samples into a normal group or an anomalous group;
performing multiclass classification to classify the data samples of the anomalous group into anomaly classes;
identifying a first set of the data samples in the anomalous group as false positives resulting from the binary classification when the multiclass classification fails to classify the data samples of the first set into one of the anomaly classes;
performing anomaly detection on the data samples of the normal group;
identifying a second set of the data samples in the normal group as false negatives resulting from the binary classification when the anomaly detection detects anomalies in the data samples of the second set; and
adding the data samples of the second set to the anomalous group for the multiclass classification.

12. The method of claim 11, further comprising:
performing anomaly detection on the data samples of the first set identified as false positives; and
verifying one or more of the data samples of the first set as false positives resulting from the binary classification when the anomaly detection does not detect anomalies in the one or more of the data samples of the first set.

13. The method of any of claims 11 to 12, further comprising:
performing anomaly detection on the data samples of the first set identified as false positives; and
identifying one or more of the data samples of the first set as false negatives resulting from the multiclass classification when the anomaly detection detects anomalies in the one or more of the data samples of the first set;
wherein the anomaly detection is performed with an autoencoder; and
the method further comprises re-training the autoencoder using one or more of the data samples of the first set identified as false negatives.

14. The method of claim 13, wherein:
the binary classification is performed with a machine learning binary classifier model trained using supervised learning; and
the method further comprises:
re-training the machine learning binary classifier model using one or more of the data samples of the first set identified as false positives along with correct labels; and
re-training the machine learning binary classifier model using one or more of the data samples of the second set identified as false negatives along with correct labels.

15. A non-transitory computer readable medium comprising program instructions that, when executed by an apparatus, cause the apparatus to perform at least the following:
perform binary classification of data samples in a dataset to classify the data samples into a normal group or an anomalous group;
perform multiclass classification to classify the data samples of the anomalous group into anomaly classes; and
identify a first set of the data samples in the anomalous group as false positives resulting from the binary classification when the multiclass classification fails to classify the data samples of the first set into one of the anomaly classes.
